# EUROPEAN PATENT SPECIFICATION

(11) **EP 3 006 233 B1**
(45) Date of publication and mention of the grant of the patent: **24.07.2019**
(21) Application number: 14807303.4
(22) Date of filing: 27.05.2014
(51) Int. Cl.: B60C 11/12, B60C 11/03

(54) **TIRE**
REIFEN
PNEUMATIQUE

(30) Priority: 05.06.2013 JP 2013118872
(43) Date of publication of application: 13.04.2016
(73) Proprietor: Bridgestone Corporation, Tokyo 104-8340 (JP)
(72) Inventor: HASHIMOTO, Kento, Tokyo 104-8340 (JP)
(74) Representative: Oxley, Robin John George
(86) International application number: PCT/JP2014/063915
(87) International publication number: WO 2014/196409

(56) References cited:
- EP-A1- 0 718 125
- JP-A- 2003 226 116
- JP-A- 2006 076 556
- JP-A- 2006 111 091
- JP-A- 2007 210 534
- JP-A- 2008 307 935
- JP-A- 2010 006 107
- JP-A- 2010 254 156
- JP-A- 2013 103 621

## Description

### Technical Field

The present invention relates to a tire.

### Background Art

Conventionally, to improve the performance on ice and snow (ICE performance) of a tire, the methods of increasing the ground contact area of the tire and increasing the sipe amount provided in the tread surface of the tire are known.

In addition, in order to improve the wear performance of the tire, increasing the ground contact area of the tire has been performed. As the methods of increasing the ground contact area of the tire, a method of increasing the width direction length of the tread surface, a method of reducing the area of the portion of the groove, and a method of increasing the depth of the groove provided in the tread surface are known. In addition, as another method for improving the wear performance in the tire, a method of increasing the rigidity of the land part (block) formed in the tread of the tire is known.

Furthermore, in order to improve the rolling performance in the tire, a method of reducing the weight of such a tire by reducing the "tread volume" is known. It should be noted that such "tread volume" is calculated by the product of the above-mentioned ground contact area and the depth of the above-mentioned groove. Attention is also drawn to the disclosures of JP2013-103621, JP2008-307935, EP0718125 and JP2010-006107.

### Citation List

### Patent Literature

Patent Literature 1: WO2006/022120

### Summary of Invention

### Technical Problem

Typically, in order to maintain the ICE performance, it is required not to reduce the ground contact area of the tire and the sipe amount provided in the tread surface of the tire.

In addition, in order to improve the wear performance, it is required to increase the rigidity of the land part formed in the tread of the tire. Typically, although it is possible to increase the rigidity of such a land part by reducing the sipe amount provided in the tread surface of the tire, as a result, the ICE performance is lowered.

Furthermore, although it is possible to improve the rolling efficiency by reducing the "tread volume", as a result, both ICE performance and wear performance are lowered.

Thus, conventionally, it has been considered difficult to improve the wear performance and the rolling performance in the tire necessary to maintain the ICE performance.

Thus, the present invention is made in view of the above problems, and has an object to provide a tire improving the wear performance and the rolling performance while maintaining the ICE performance.

### Solution to Problem

The present invention provides a studless tire as claimed in claim 1.

[DELETED]

[DELETED]

[DELETED]

In the present invention, a depth of the width direction groove for partitioning the center land part may be configured so as to be larger than a depth of the width direction groove for partitioning the second land part.

In the present invention, a depth of the width direction groove for partitioning the second land part may be configured so as to be larger than a depth of the width direction groove for partitioning the shoulder land part.

### Advantageous Effects of Invention

As described above, according to the present invention, it is possible to provide a tire improving the wear performance and the rolling performance while maintaining the ICE performance.

### Brief Description of Drawings

Fig. 1 is a cross-sectional view in the tire radial direction of the tire according to a first embodiment of the present invention.
Fig. 2 is a plan view of a part of the tread surface in the tire according to the first embodiment of the present invention.
Fig. 3 is a plan view of a part of the tread surface in the tire according to the first embodiment of the present invention.

### Description of Embodiments

### (First Embodiment of the Present Invention)

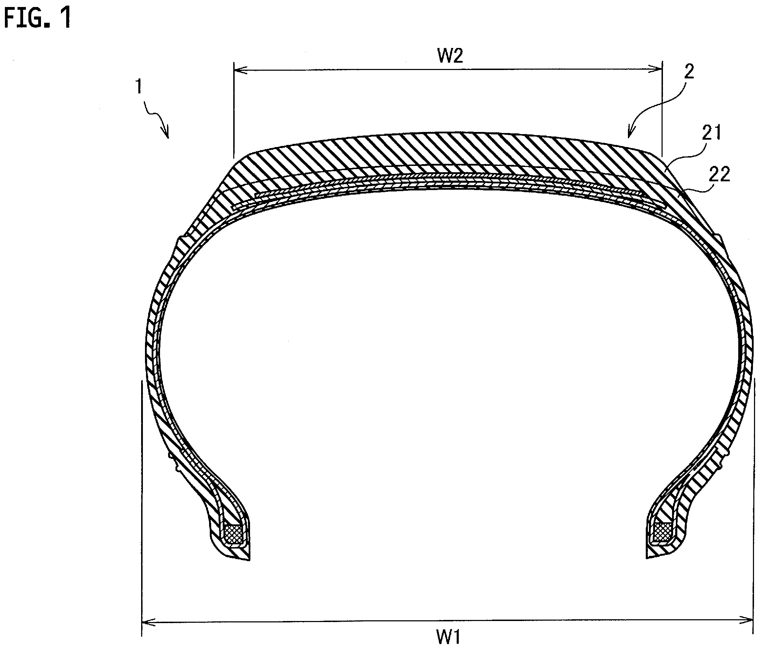

The tire 1 according to the first embodiment of the present invention will be described with reference to Figs. 1 to 3.

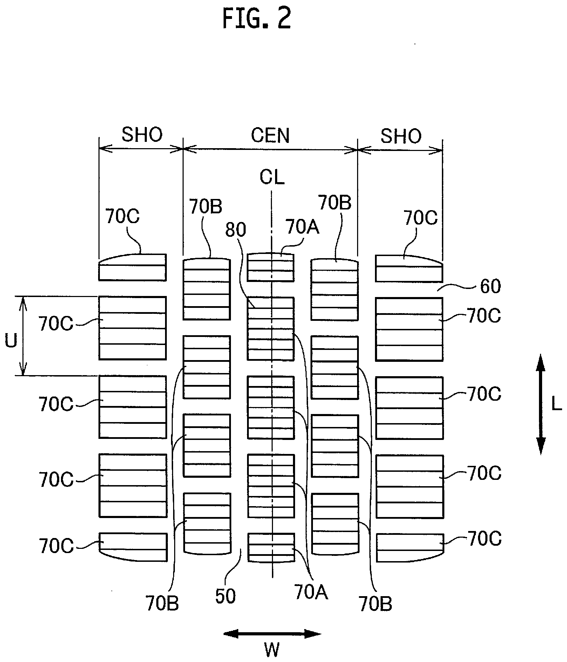

Fig. 1 shows a cross-sectional view in the tire radial direction of the tire 1 according to the first embodiment, and Fig. 2 shows a plan view of a part of the tread surface in the tire 1 according to the first embodiment.

Although the winter tire necessary to maintain the ICE performance will be described as the tire 1 in the present embodiment, the present invention is not intended to be limited to the winter tire, and is also applicable to the summer tire.

As shown in Fig. 1, in the tire 1 of the present embodiment, the length of the tread part 2 in the tire width direction W may be configured so as to be 60 to 95% of the length of the tire 1 in the tire width direction W. According to this configuration, the wear performance and the rolling performance can be improved at low cost.

It should be noted that when the length of the tread part 2 in the tire width direction W is smaller than 60% of the length of the tire 1 in the tire width direction W, the ground contact area of the tire 1 cannot be sufficiently secured, and the wear performance and the ICE performance are lowered. In addition, when the length of the tread part 2 in the tire width direction W is larger than 95% of the length of the tire 1 in the tire width direction W, the rolling performance cannot be sufficiently secured.

Here, as shown in Fig. 1, the tread part 2 includes tread rubbers 21 and 22. For example, the tread rubber 21 may be a foamed rubber having a low loss and a low foaming rate, and the tread rubber 22 may be a rubber having a low loss.

The wear performance and the rolling performance can be improved by using this tread rubber 21. In addition, the rolling performance can be improved by using this tread rubber 22.

It should be noted that these tread rubbers 21 and 22 may be the rubbers having the same property. That is, both of the tread rubbers 21 and 22 may be foamed rubbers.

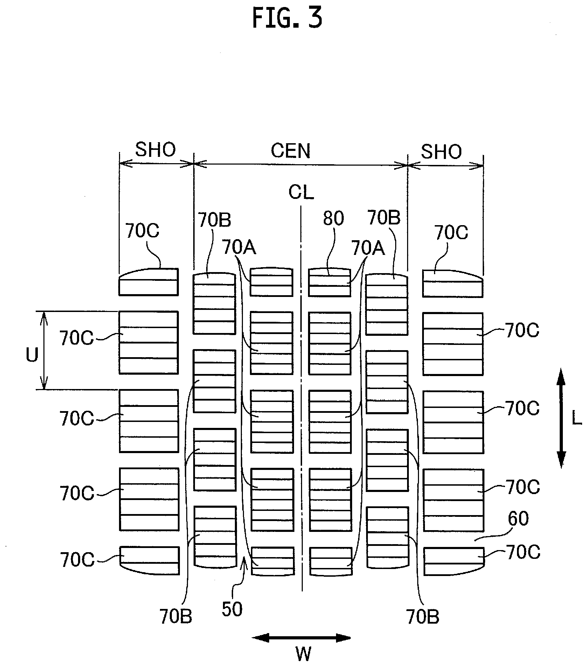

As shown in Figs. 2 and 3, in the tread part 2, the tire 1 according to the present embodiment includes a plurality of land parts 70A to 70C partitioned by the circumferential direction groove 50 extending in the tire circumferential direction L and the width direction groove 60 extending in the tire width direction W.

Here, the tire circumferential direction L is a circumferential direction where the tire rotation axis is set as the central axis, and the tire width direction W is a direction parallel to the tire rotation axis.

For example, in the tire 1 having the size of "195/65R15", the depth of the width direction groove 60 is preferably 75 to 100% of the thickness of the tread part 2, and more preferably 85 to 95% of the thickness of the tread part 2. According to this configuration, the wear performance can be improved.

In the examples of Figs. 2 and 3, the land part 70A is a land part (center land part) in the center rib arranged in a position closest to the tire equator line CL, the land part 70B is a land part (second land part) in the second rib adjacent to the land part 70A on the outside thereof in the tire width direction W, and the land part 70C is a land part (shoulder land part) in the shoulder rib arranged farthest from the tire equator line CL on the outside of the land part 70A in the tire width direction W. It should be noted that in the examples of Figs. 2 and 3, the land part 70C is adjacent to the land part 70B on the outside thereof in the tire width direction W.

In addition, as shown in Figs. 2 and 3, in the tire 1 according to the present embodiment, a plurality of land parts 70A, a plurality of land parts 70B, and a plurality of land parts 70C are provided along the tire circumferential direction L.

It should be noted that in the present embodiment, the example where one center rib, two second ribs, and two shoulder ribs are formed (example in Fig. 2) and the example where two center ribs, two second ribs, and two shoulder ribs are formed (example in Fig. 3) are described. However, the present invention is not limited to these examples, and is also applicable to the tire having other rib configurations.

In addition, the shape of each of land parts 70A to 70C as viewed along a direction perpendicular to the tread surface may be a rectangular shape as shown in Figs. 2 and 3, and may be another shape such as a parallelogrammic shape and a fletching shape.

As shown in Figs. 2 and 3, a plurality of sipes 80 are formed in each of the land parts 70A to 70C. In the present embodiment, the plurality of sipes 80 are grooves designed so as to close during the ground contact of the tire 1.

In addition, as shown in Figs. 2 and 3, the depth of the width direction groove 60 in the central area CEN of the tire width direction W is configured so as to be larger than the depth of the width direction groove 60 in the shoulder area SHO on the outside of the central area CEN in the tire width direction W.

It should be noted that, for example, as shown in Figs. 2 and 3, in the tire according to the present embodiment, the land part 70A and 70B are arranged in the central area CEN, and the land part 70C is arranged in the shoulder area SHO.

In addition, the depth of the width direction groove 60 in the land part 70A may be configured to be larger than the depth of the width direction groove 60 in the land part 70B.

Furthermore, the depth of the width direction groove 60 in the land part 70B may be configured to be larger than the depth of the width direction groove 60 in the land part 70C.

For example, in the studless tire, the depth of the width direction groove 60 in the central area CEN and the depth of the width direction groove 60 in the shoulder area SHO may be configured so as to fall within the range of 7.0 to 8.9 mm.

Thus, it is possible to increase the rigidity in the shoulder area SHO by increasing the distance between the sipes 80 in the tire circumferential direction L and reducing the depth of the width direction groove 60 in the shoulder area.

Here, the sipe density in the land part 70A may be configured so as to be larger than the sipe densities in the land parts 70B and 70C arranged on the outside of the land part 70A in the tire width direction W.

In addition, the sipe density in the land part 70B may be configured so as to be larger than the sipe density in the land part 70C arranged on the outside of the land part 70A and the land part 70B in the tire width direction W.

Here, the sipe density is a value obtained by dividing the total sum of the length (in the case of the curve and the like, the length to be extended in a straight line) of each of the sipes 80 in the land parts 70A to 70C by the area of the tread of each of the land parts 70A to 70C.

For example, the sipe density in the land part 70A may be configured so as to be 110 to 500% of the sipe density in the land part 70C.

In addition, the sipe density in the land part 70B may be configured so as to be 100 to 130% of the edge components per unit length in the tire circumferential direction L in the land part 70C.

For example, the sipe density in the land part 70A may be configured so as to be 100 to 500% of the sipe density in the land part 70B.

It should be noted that the sum of the number of edges (edge components) per unit length U in the tire circumferential direction L may be used instead of the above-mentioned sipe density. It should be noted that the unit length U is defined for each of the land parts 70A to 70C.

In this case, the sum of the number of edges per unit length U in the tire circumferential direction L in the land parts 70A and 70B may be configured so as to be larger than the sum of the number of edges per unit length U in the tire circumferential direction L in the land part 70C arranged on the outside of the land parts 70A and 70B in the tire width direction W.

In addition, the sum of the number of edges per unit length U in the tire circumferential direction L in the land part 70A may be configured so as to be equal to or larger than the sum of the number of edges per unit length U in the tire circumferential direction L in the land part 70B arranged on the outside of the land part 70A in the tire width direction W.

For example, the sum of the number of edges per unit length U in the tire circumferential direction L in the land part 70A may be configured so as to be 110 to 500% of the sum of the number of edges per unit length in the tire circumferential direction L in the land part 70C.

In addition, the sum of the number of edges per unit length U in the tire circumferential direction L in the land part 70B is configured so as to be 100 to 300% of the sum of the number of edges per unit length in the tire circumferential direction L in the land part 70C.

In the tire 1 according to the present embodiment, although the sipe amount in the land part 70A in the center rib is not reduced, the sipe amount is reduced gradually from the land part 70B in the second rib toward the land part 70C in the shoulder rib. As a result, according to the tire 1 according to the present embodiment, it is possible to maintain the ICE performance while improving the wear performance by reducing the partial wear.

According to the tire 1 according to the present embodiment, the depth of the width direction groove 60 between the land parts 70B in the second rib is smaller than the depth of the width direction groove 60 between the land parts 70A in the center rib. For this reason, in the entire area from the land part 70A in the center rib to the land part 70B in the second rib, it is possible to reduce the partial wear without significantly reducing the tread volume. Therefore, in the area from the land part 70A in the center rib to the land part 70B in the second rib, it is possible to improve the wear performance while maintaining the ICE performance.

In addition, the depth of the width direction groove 60 between the land parts 70C in the shoulder rib is smaller than the depth of the width direction groove 60 between the land parts 70B in the second rib. For this reason, in the entire area from the land part 70B in the second rib to the land part 70C in the shoulder rib, it is possible to reduce the partial wear without significantly reducing the tread volume. Therefore, in the area from the land part 70B in the second rib to the land part 70C in the shoulder rib, it is possible to improve the wear performance while maintaining the ICE performance.

As can be seen from the above, the depth of the width direction groove 60 is reduced gradually from the land part 70A in the center rib toward the land part 70C in the shoulder rib. For this reason, in the entire area of the tread part, it is possible to reduce the partial wear without significantly reducing the tread volume. Therefore, in the entire area from the land part 70A in the center rib to the land part 70C in the shoulder rib, it is possible to improve the wear performance while maintaining the ICE performance.

In addition, in the tire 1 according to the present embodiment, there is a tendency that the wear amount in the land part 70A in the center rib is larger than the wear amount in the land part 70C in the shoulder rib. In order to solve the problems caused by this tendency, the rigidity of the land part 70C in the shoulder rib is made higher than the rigidity of the land part 70A in the center rib. Thereby, the problems caused by the above-mentioned tendency can be solved. Furthermore, the rigidity of the whole tire 1 can be increased, and therefore the wear performance can be improved.

In addition, in the tire 1 of the present embodiment, there is a tendency that the wear amount in the land part 70A in the center rib becomes larger than the wear amount in the land part 70B in the second rib. In view of this tendency, in the tire 1 according to the present embodiment, the sipe density of the land part 70B in the second rib is small, or the depth of the width direction groove 60 thereof is reduced compared to those of the land part 70A in the center rib. Thereby, the rigidity of the land part 70B in the second rib can be made higher than the rigidity of the land part 70A in the center rib. As a result, it is possible to reduce the degree that the wear amount in the land part 70A in the center rib becomes larger than the wear amount in the land part 70B in the second rib. It should be noted that the sipe density of the land part 70B in the second rib may be small, and the depth of the width direction groove 60 thereof may be reduced compared to those of the land part 70A in the center rib.

In the tire 1 of the present embodiment, there is a tendency that the wear amount in the land part 70B in the second rib is larger than the wear amount in the land part 70C in the shoulder rib. In view of this tendency, in the tire 1 of the present embodiment, the sipe density of the land part 70C in the shoulder rib is small, or the depth of the width direction groove 60 thereof is reduced compared to those of the land part 70B in the second rib. Thereby, the rigidity of the land part 70C in the shoulder rib can be made higher than the rigidity of the land part 70B in the second rib. As a result, it is possible to reduce the degree that the wear amount in the land part 70B in the second rib becomes larger than the wear amount in the land part 70C in the shoulder rib. It should be noted that the sipe density of the land part 70C in the shoulder rib may be small, and the depth of the width direction groove 60 thereof may be reduced compared to those of the land part 70B in the second rib.

In addition, the sipe density becomes smaller, or the depth of the width direction groove 60 is reduced gradually from the land part 70A in the center rib toward the land part 70C in the shoulder rib. Thereby, the rigidity of the land part 70B in the second rib can be made higher than that of the land part 70A in the center rib, and the rigidity of the land part 70C in the shoulder rib can be made higher than that of the land part 70B in the second rib. As a result, the occurrence of the partial wear of the tire 1 can be reduced. Therefore, the wear performance of the whole tire 1 can be improved. It should be noted that the sipe density may become smaller, and the depth of the width direction groove 60 may be reduced gradually from the land part 70A in the center rib toward the land part 70C in the shoulder rib.

Furthermore, in the tire 1 according to the present embodiment, the rigidity of the land part 70C in the shoulder rib is increased. For this reason, the edge pressure and the ground contact area in the land part 70C in the shoulder rib can be increased. As a result, the ICE performance (brake performance on ice and snow) lowered by the edge components of the land part 70C in the shoulder rib being reduced can be complemented. In general, a large force is applied to the land part 70C in the shoulder rib at the time of brake, and the collapse is likely to occur. Therefore, the tire 1 of the present embodiment described above can be said to be a preferred form so as to achieve the effect of complementing the reduction in the ICE performance.

To summarize the above items, in the tire 1 according to the present embodiment, the sipe density becomes smaller, or the depth of the width direction groove 60 is reduced gradually from the land part 70A in the center rib toward the land part 70C in the shoulder rib. Thereby, the rigidity of the land part 70B in the second rib can be made higher than that of the land part 70A in the center rib, and the rigidity of the land part 70C in the shoulder rib can be made higher than that of the land part 70B in the second rib.

In addition, in the tire 1 according to the present embodiment, the edge pressure and the ground contact area are increased in the land part 70B in the second rib compared to those in the land part 70A in the center rib, and the edge pressure and the ground contact area are increased in the land part 70C in the shoulder rib compared to those in the land part 70B in the second rib. Thereby, the ICE performance (brake performance on ice and snow) lowered by the edge components of the land part 70B in the second rib and the land part 70C in the shoulder rib being reduced is complemented.

It should be noted that, in general, a large force is applied to the land part 70B in the second rib at the time of brake compared to the land part 70A in the center rib, and a large force at the time of brake is applied to the land part 70C in the shoulder rib compared to the land part 70B in the second rib. That is, large forces are increasingly applied to the land part 70A, the land part 70B, and the land part 70C in this order, and the collapse is likely to occur. For this reason, according to the configuration of the land part 70A, the land part 70B, and the land part 70C of the present embodiment described above, as mentioned above, the effect can be achieved that the tire 1 as a whole can improve the wear performance while maintaining the ICE performance.

In addition, in the tire 1 according to the present embodiment, the sipe amount in each of the land parts 70A to 70C is adjusted, that is, is made different for each of the parts while the length of the tread part 2 in the tire width direction W is reduced. Therefore, although the ground contact area of the tire 1 becomes smaller, it is possible to reduce the collapse of land part and to prevent the decrease in the ground contact area by increasing the rigidity of the land part, and to increase the edge pressure of the land part. For this reason, the ICE performance can be maintained.

In addition, in the tire 1 according to the present embodiment, the depth of the width direction groove in each of the land parts 70A to 70C is adjusted, that is, is made different for each of the parts while the length of the tread part 2 in the tire width direction W is reduced. Therefore, although the ground contact area of the tire 1 becomes smaller, the edge pressure can be increased, and therefore the ICE performance can be maintained.

Furthermore, in the tire 1 according to the present embodiment, although the ICE performance can be improved by using the foamed rubber for the tread part 2, the wear performance and the rolling performance are somewhat degraded. However, the sipe amount in each of the land parts 70A to 70C is adjusted, that is, is made different for each of the parts, whereby the rigidity of the land parts 70A to 70C can be partially increased, and therefore the degradation of the wear performance and the rolling performance can be compensated. In addition, the depth of the width direction groove 60 in each of the land parts 70A to 70C is adjusted, that is, is made different for each of the parts, whereby the rigidity of the land parts 70A to 70C can also be partially increased, and therefore the degradation of the wear performance and the rolling performance can be compensated.

As described above, in the tire 1 according to the present embodiment, the sipe density is gradually reduced from the land part 70A in the center rib toward the land part 70C in the shoulder rib through the land part 70B in the second rib. Therefore, the rigidity of the land part 70B in the second rib is made higher than that of the land part 70A in the center rib, and the rigidity of the land part 70C in the shoulder rib is made higher than that of the land part 70B in the second rib.

However, in the part where the sipe density is small, the ICE performance (brake performance on ice and snow) is lowered due to the edge components being reduced. In addition, a greater force is applied at the time of brake, and therefore shortage still occurs in the rigidity of block constituting the land part only by the sipe density being reduced.

Thus, in the tire 1 according to the present embodiment, not only the sipe density is partially reduced, but also the depth of the width direction groove is partially reduced. Thereby, it is possible to increase not only the edge pressure due to the sipe, but also the edge pressure due to the blocks constituting the land part.

Furthermore, reducing sipes means that the part where the sipe has existed is replaced the land part, and therefore the ground contact area between the land part and the ground can be increased. As a result, the ICE performance (brake performance on ice and snow) lowered due to the reduction in the edge components by the sipes of the land part 70B in the second rib and the land part 70C in the shoulder rib can be complemented by the edge pressure due to the increased land part. In addition, in the tire 1 of the present embodiment, not only the sipe density is reduced, but also the depth of the width direction groove 60 is reduced. For this reason, the rigidity of the land part 70B in the second rib and the land part 70C in the shoulder rib is significantly increased. Therefore, even when a large force is applied to the land part 70B in the second rib and the land part 70C in the shoulder rib at the time of brake, it is possible to reduce the occurrence of collapse of each of the blocks constituting the land parts.

In short, according to the tire 1 of the present embodiment, it is possible to improve the wear performance and the rolling performance while maintaining the aforementioned ICE performance by at least any one of partially reducing the sipe density and partially reducing the depth of the width direction groove.

### Examples

Next, in order to clarify the effect of the present invention, results of tests performed by using the tire according to a Comparative Example and an Example 1 will be described. It should be noted that the present invention is not intended to be limited to these examples in any way.

In the present test, the size and the pattern design factor of all the tires are the same. Here, in the present test, the size of all the tires is "195/65R15".

Here, as the Comparative Example, the tire where the sipe density in the land part 70A is not configured so as to be larger than that in the land parts 70B or 70C is used. As the Example 1, the tire where the sipe density in the land part 70A is configured so as to be larger than that in the land parts 70B or 70C is used. As an Example 2, the tire where the sipe density in the land part 70A is configured so as to be larger than that in the land parts 70B or 70C, and the sipe density in the land part 70B is configured so as to be larger than that in the land part 70C is used.

As an Example 3, the tire where the depth of the width direction groove in the land part 70A is configured so as to be larger than that in the land parts 70B or 70C is used. In addition, as an Example 4, the tire where the depth of the width direction groove in the land part 70A is configured so as to be larger than that in the land parts 70B or 70C, and the depth of the width direction groove in the land part 70B is configured so as to be larger than that in the land part 70C is used. As an Example 5, the tire where the sipe density in the land part 70A is configured so as to be larger than that in the land parts 70B or 70C, and the depth of the width direction groove in the land part 70A is configured so as to be larger than that in the land parts 70B or 70C is used. As an Example 6, the tire where the sipe density in the land part 70A is configured so as to be larger than that in the land parts 70B or 70C, and the depth of the width direction groove in the land part 70A is configured so as to be larger than that in the land parts 70B or 70C, and the sipe density in the land part 70B is configured so as to be larger than that in the land part 70C, and the depth of the width direction groove in the land part 70B is configured so as to be larger than that in the land part 70C is used.

The results of the tests described above are shown in Table 1 and Table 2. Each of the evaluation results of the ICE performance, the wear performance, and the rolling performance is indicated by an index. The larger the index is, the better the ICE performance, the wear performance, and the rolling performance are.

**[TABLE 1]**

| | ICE Performance | Wear Performance | Rolling Performance |
|---|---|---|---|
| Comparative Example | 100 | 100 | 100 |
| Example 1 | 110 | 150 | 108 |
| Example 2 | 120 | 200 | 105 |

**[TABLE 2]**

| | ICE Performance | Wear Performance | Rolling Performance |
|---|---|---|---|
| Comparative Example | 100 | 100 | 100 |
| Example 3 | 105 | 110 | 105 |
| Example 4 | 108 | 118 | 105 |
| Example 5 | 116 | 115 | 108 |
| Example 6 | 130 | 220 | 107 |

From the above test results, it is understood that the tire according to each of the Examples 1 to 6 greatly improves the wear performance and the rolling performance while maintaining the ICE performance, compared to the tire according to the Comparative Example.

In the above, although the present invention is described in detail by using the above embodiments, it is obvious that the present invention is not intended to be limited to the embodiments described in the present specification for those skilled in the art. Therefore, the description of the present specification is intended to be for illustrative purpose, and is not intended to have any restrictive meaning to the present invention.

### Industrial Applicability

The present invention is applicable to a tire improving the wear performance and the rolling performance while maintaining the ICE performance.

### Reference Signs List

- 1: TIRE
- 2: TREAD PART
- 21, 22: TREAD RUBBER
- 50: CIRCUMFERENTIAL DIRECTION GROOVE
- 60: WIDTH DIRECTION GROOVE
- 70A, 70B, 70C: LAND PART
- 80: SIPE

## Claims

1. A studless tire (1) including a plurality of land parts (70A, 70B, 70C) partitioned by a circumferential direction groove (50) extending in a tire circumferential direction (L) and a width direction groove (60) extending in a tire width direction (W) in a tread part (2), the studless tire (1) comprising:
a center land part (70A) arranged in a position closest to a tire equator line (CL) and a shoulder land part (70C) arranged in a position farthest from the tire equator line (CL) on an outside of the center land part (70A) in the tire width direction (W) as the plurality of land parts (70A, 70B, 70C),
wherein a length of the tread part (2) in the tire width direction (W) is configured so as to be 60 to 95% of a length of the studless tire (1) in the tire width direction (W), and
wherein a plurality of sipes (80) are formed in each of the center land part (70A) and the shoulder land part (70C), and the plurality of sipes (80) are grooves designed so as to close during the ground contact of the studless tire (1),
wherein a sipe (80) density in the center land part (70A) is configured so as to be larger than a sipe (80) density in the shoulder land part (70C),
further comprising a second land part (70B) adjacent to the center land part (70A) on an outside of the center land part (70A) in the tire width direction (W), and positioned on the center land part side of the shoulder land part (70C),
wherein a plurality of sipes (80) are formed in the second land part (70B), and the plurality of sipes (80) are grooves designed so as to close during the ground contact of the studless tire (1),
wherein a sipe (80) density in the second land part (70B) is configured so as to be larger than the sipe (80) density in the shoulder land part (70C), and
wherein the sipe (80) density in the center land part (70A) is configured so as to be larger than the sipe (80) density in the second land part (70B).

2. The studless tire (1) according to claim 1,
wherein a depth of the width direction groove (60) for partitioning the center land part (70A) is configured so as to be larger than a depth of the width direction groove (60) for partitioning the second land part (70B).

3. The studless tire (1) according to claim 1,
wherein a depth of the width direction groove (60) for partitioning the second land part (70B) is configured so as to be larger than a depth of the width direction groove (60) for partitioning the shoulder land part (70C).

## Patentansprüche

1. Stollenloser Reifen (1), der mehrere Stegteile (70A, 70B, 70C), die durch eine Umfangsrichtungsrille (50), die sich in einer Reifenumfangsrichtung (L) erstreckt, und eine Breitenrichtungsrille (60), die sich in einer Reifenbreitenrichtung (W) erstreckt, unterteilt werden, in einem Laufflächenteil (2) einschließt, wobei der stollenlose Reifen (1) Folgendes umfasst:
einen Mittenstegteil (70A), der in einer Position, am nächsten zu einer Reifenäquatorlinie (CL), angeordnet ist, und einen Schulterstegteil (70C), der in einer Position, am weitesten von der Reifenäquatorlinie (CL), auf einer in der Reifenbreitenrichtung (W) äußeren Seite des Mittenstegteils (70A) als die mehrere Stegteile (70A, 70B, 70C), angeordnet ist,
wobei eine Länge des Laufflächenteils (2) in der Reifenbreitenrichtung (W) so konfiguriert ist, dass sie 60 bis 95 % einer Länge des stollenlosen Reifens (1) in der Reifenbreitenrichtung (W) beträgt, und
wobei mehrere Lamellen (80) sowohl in dem Mittenstegteil (70A) als auch in dem Schulterstegteil (70C) geformt sind und die mehreren Lamellen (80) Rillen sind, die so gestaltet sind, dass sie sich während der Bodenberührung des stollenlosen Reifens (1) schließen,
wobei eine Dichte der Lamellen (80) in dem Mittenstegteil (70A) so konfiguriert ist, dass sie größer ist als eine Dichte der Lamellen (80) in dem Schulterstegteil (70C),
ferner umfassend einen zweiten Stegteil (70B), angrenzend an den Mittenstegteil (70A) auf einer in der Reifenbreitenrichtung (W) äußeren Seite des Mittenstegteils (70A) und angeordnet auf der Mittenstegteilseite des Schulterstegteils (70C),
wobei mehrere Lamellen (80) in dem zweiten Stegteil (70B) geformt sind und die mehreren Lamellen (80) Rillen sind, die so gestaltet sind, dass sie sich während der Bodenberührung des stollenlosen Reifens (1) schließen,
wobei eine Dichte der Lamellen (80) in dem zweiten Stegteil (70B) so konfiguriert ist, dass sie größer ist als die Dichte der Lamellen (80) in dem Schulterstegteil (70C), und
wobei die Dichte der Lamellen (80) in dem Mittenstegteil (70A) so konfiguriert ist, dass sie größer ist als die Dichte der Lamellen (80) in dem zweiten Stegteil (70B).

2. Stollenloser Reifen (1) nach Anspruch 1,
wobei eine Tiefe der Breitenrichtungsrille (60) zum Unterteilen des Mittenstegteils (70A) so konfiguriert ist, dass sie größer ist als eine Tiefe der Breitenrichtungsrille (60) zum Unterteilen des zweiten Stegteils (70B).

3. Stollenloser Reifen (1) nach Anspruch 1,
wobei eine Tiefe der Breitenrichtungsrille (60) zum Unterteilen des zweiten Stegteils (70B) so konfiguriert ist, dass sie größer ist als eine Tiefe der Breitenrichtungsrille (60) zum Unterteilen des Schulterstegteils (70C).

## Revendications

1. Bandage pneumatique sans crampons (1), incluant plusieurs parties d'appui (70A, 70B, 70C) séparées par une rainure dans la direction circonférentielle (50) s'étendant dans une direction circonférentielle du bandage pneumatique (L) et une rainure dans la direction de la largeur (60) s'étendant dans une direction de la largeur du bandage pneumatique (W) dans une partie de bande de roulement (2), le bandage pneumatique sans crampons (1) comprenant :
une partie d'appui centrale (70A) agencée dans une position la plus proche d'une ligne équatoriale du bandage pneumatique (CL), et une partie d'appui d'épaulement (70C) agencée dans une position la plus éloignée de la ligne équatoriale du bandage pneumatique (CL), sur un extérieur de partie d'appui centrale (70A), dans la direction de la largeur du bandage pneumatique (W), constituant les plusieurs parties d'appui (70A, 70B, 70C) ;
dans lequel une longueur de la partie de bande de roulement (2), dans la direction de la largeur du bandage pneumatique (W), est configurée pour représenter 60 à 95% d'une longueur du bandage pneumatique sans crampons (1), dans la direction de la largeur du bandage pneumatique (W) ; et
dans lequel plusieurs lamelles (80) sont formées dans chacune de la partie d'appui centrale (70A) et de la partie d'appui d'épaulement (70C), les plusieurs lamelles (80) étant des rainures conçues de sorte à être fermées lors du contact au sol du bandage pneumatique sans crampons (1) ;
dans lequel une densité des lamelles (80) dans la partie d'appui centrale (70A) est configurée pour être supérieure à une densité des lamelles (80) dans la partie d'appui d'épaulement (70C) ;
comprenant en outre une deuxième partie d'appui (70B) adjacente à la partie d'appui centrale (70A), sur un extérieur de la partie d'appui centrale (70A), dans la direction de la largeur du bandage pneumatique (W, et positionnée sur le côté de la partie d'appui centrale de la partie d'appui d'épaulement (70C) ;
dans lequel plusieurs lamelles (80) sont formées dans la deuxième partie d'appui (70B), les plusieurs lamelles (80) étant des rainures conçues de sorte à se fermer au cours du contact au sol du bandage pneumatique sans crampons (1) ;
dans lequel une densité des lamelles (80) dans la deuxième partie d'appui (70B) est configurée pour être supérieure à la densité des lamelles (80) dans la partie d'appui d'épaulement (70C) ; et
dans lequel la densité des lamelles (80) dans la partie d'appui centrale (70A) est configurée pour être supérieure à la densité des lamelles (80) dans la deuxième partie d'appui (70B).

2. Bandage pneumatique sans crampons (1) selon la revendication 1,
dans lequel une profondeur de la rainure dans la direction de la largeur (60) destinée à séparer la partie d'appui centrale (70A) est configurée pour être supérieure à une profondeur de la rainure dans la direction de la largeur (60) destinée à séparer la deuxième partie d'appui (70B).

3. Bandage pneumatique sans crampons (1) selon la revendication 1,
dans lequel une profondeur de la rainure dans la direction de la largeur (60) destinée à séparer la deuxième partie d'appui (70B) est configurée pour être supérieure à une profondeur de la rainure dans la direction de la largeur (60) destinée à séparer la partie d'appui d'épaulement (70C).
